# EUROPÄISCHE PATENTSCHRIFT

(11) **EP 3 917 751 B1**
(45) Veröffentlichungstag und Bekanntmachung des Hinweises auf die Patenterteilung: **21.08.2024**
(21) Anmeldenummer: 20705613.6
(22) Anmeldetag: 14.01.2020
(51) Int. Cl.: B29C 49/42, B29C 49/58, B29C 49/12, B29C 49/62

(54) **VERFAHREN UND VORRICHTUNG ZUR BLASDRUCKERZEUGUNG**
METHOD AND DEVICE FOR GENERATING BLOWING PRESSURE
PROCÉDÉ ET DISPOSITIF DE PRODUCTION DE PRESSION DE SOUFFLAGE

(30) Priorität: 31.01.2019 DE 102019102422
(43) Veröffentlichungstag der Anmeldung: 08.12.2021
(73) Patentinhaber: Plastconsult Kunststofftechnik GmbH, 59457 Werl (DE)
(72) Erfinder: PESAVENTO, Modesto M., 59457 Werl (DE)
(74) Vertreter: Klickow & Wetzel PartGmbB
(86) Internationale Anmeldenummer: PCT/DE2020/100019
(87) Internationale Veröffentlichungsnummer: WO 2020/156609

(56) Entgegenhaltungen:
- EP-A2- 2 052 843
- DE-A1- 102013 103 543
- US-A1- 2004 173 949

## Beschreibung

Die Erfindung betrifft eine Vorrichtung zur Blasformung von Behältern aus einem thermoplastischen Material aus einem Vorformling mit wenigstens einer Blasstation, die wenigstens eine Blasform zur Ausformung des Behälters aufweist, mit wenigstens einem Verdichter zur Bereitstellung von Blasgas zur Durchführung der Blasformung in der Blasform, mit wenigstens einer Blasdüse zur Abgabe des Blasgases an den Vorformling, wobei die Blasdüse mit dem Verdichter fluidisch verbunden ist, mit wenigstens einer Reckstange zum Recken des Vorformlings, und mit wenigstens einem Reckstangenantrieb zum Bewegen der wenigstens einen Reckstange in den Vorformling hinein. Weiterhin betrifft die Erfindung ein Verfahren zur Blasformung von Behältern, bei dem ein Vorformling nach einer thermischen Konditionierung innerhalb einer Blasform einer Blasstation einer Vorrichtung zur Blasformung von Behältern, durch Blasdruckeinwirkung von in die Blasform eingebrachtem Blasgas in den Behälter umgeformt wird, wobei ein Recken des Vorformlings durch Einführen einer Reckstange in den Vorformling vorgenommen wird.

Die Vorrichtung zur Blasformung von Behältern aus einem thermoplastischen Material ist Bestandteil einer mit einer Blasformen versehenen Blasstation und weist eine Reckstange zur Beaufschlagung eines in der Blasform einsetzbaren Vorformlings auf. Die Reckstange ist mit einem Linearantrieb verbunden. Die Blasstation weist eine positionierbare Blasdüse auf.

Bei einer Behälterformung durch Blasdruckeinwirkung werden Vorformlinge aus einem thermoplastischen Material, beispielsweise Vorformlinge aus PET (Polyethylenterephthalat), innerhalb einer so genannten Streckblasmaschine unterschiedlichen Bearbeitungsstationen zugeführt. Typischerweise weist eine derartige Streckblasmaschinen eine Heizeinrichtung sowie eine Blaseinrichtung auf, in deren Bereich der zuvor temperierte Vorformling durch biaxiale Orientierung zu einem Behälter expandiert wird. Die Expansion erfolgt mithilfe Hilfe von unter Druck stehendem Blasgas, das in den zu expandierenden Vorformling eingeleitet wird.

Der Begriff Blasgas wird in diesem Text allgemein verwendet. Es wird darunter ein Blasfluid verstanden. Herbei kann es sich um Gas, Dämpfe aber auch Flüssigkeiten handeln.

Das unter Druck stehenden Blasgas wird für gewöhnlich mittels eines zentral separat von der Blasmaschine angeordneten Kompressors erzeugt und über Leitungen und Anschlüsse an die Vorrichtung zur Blasformung bereitgestellt.

Innerhalb der Vorrichtung zur Blasformung können die Vorformlinge sowie die geblasen Behälter mithilfe unterschiedlicher Handhabungseinrichtung transportiert werden. Bekannt sind hier insbesondere die Verwendung von Transportdornen, auf die die Vorformlinge aufgesteckt werden. Weiterhin bekannt ist die Verwendung von Greifzangen zur Handhabung von Vorformlingen und die Verwendung von Spreizdornen, die zur Halterung in einen Mündungsbereich des Vorformlings einführbar sind.

Häufig erfolgt das Herstellen der Behälter aus Vorformlingen in einem sogenannten Zweistufenverfahren, bei dem die Vorformlinge zunächst mit einer Spritzgussmaschine hergestellt werden, anschließend zwischengelagert werden und erst später der Vorrichtung zur Blasformung zugeführt werden. Alternativ bekannt ist auch ein sogenanntes Einstufenverfahren, bei dem die Vorformlinge unmittelbar nach ihrer spritzgusstechnischen Herstellung und einer ausreichenden Verfestigung geeignet temperiert und anschließend geblasen werden.

Das Blasgas zur Ausformung des Behälters wird über eine Blasgaszuführung in den Vorformling hineingebracht. Hierbei handelt es sich für gewöhnlich um eine Blasdüse, die in Verbindung mit dem Vorformling gebracht werden muss, und durch die dann die Reckstange in den Vorformling eingreifen kann. Die Verbindung zwischen Blasgaszuführung/Blasdüse und Vorformling muss dabei dem Druck des Blasgases standhalten.

Hinsichtlich des Antriebs der Reckstangen ist unter anderem bekannt, elektrische Linearmotoren zur Bewegung zu verwenden. Bekannt ist weiterhin, dass die Reckstange über eine mechanische Kopplungseinrichtung mit der Motorwelle eines Servomotors verbunden wird, wodurch die Bewegung der Reckstange bereitgestellt wird.

Ein Vorformling aus einem thermoplastischen Material wird nach einer thermischen Konditionierung innerhalb einer Blasform von einer Reckstange gereckt und durch Blasdruckeinwirkung in den Behälter umgeformt. Häufig ist der Reckstangenantrieb mechanisch mindestens zeitweise mit der positionierbaren Blasgaszuführung derart gekoppelt, dass eine gemeinsame Bewegung durchgeführt wird.

Für gewöhnlich wird im bekannten Stand der Technik als Blasgas Druckluft verwendet. Diese Druckluft wird außerhalb der Blasvorrichtung mittels Kompressoren zentral erzeugt. Über Leitungen wird die Druckluft dann der Blasvorrichtung zugeführt. Für gewöhnlich wird die Druckluft auf 20 bis 40 bar (genannt Hochdruck) komprimiert. Entsprechend müssen alle Anschlüsse und Leitungen ausgelegt sein.

Innerhalb der Blasvorrichtung sind dann bis zu drei Blasventile vorgesehen, die für die Befüllung und Expansion des Vorformlings sowie für die Entlüftung des fertigen Behälters verwendet werden. Ein erstes Blasventil sorgt für den sogenannten Vorblasdruck bis ca. 10 bar. Unter diesem Druck beginnt der Vorformling sich zu einer "Vorblase" zu entwickeln, bis über ein zweites Ventil der eigentlichen Blasdruck (Hochdruck beispielsweise bis ca. 38bar) der Behälter komplett ausgeformt wird. Das dritte Blasventil entlüftet den unter Druck stehenden ausgeformten Behälter auf Umgebungsdruck. Bekannt ist, dass auch zwei oder mehrere Blasformen über einen dieser Hochdruckventilsätze versorgt werden können.

U.a. durch Toträume durch das Vorsehen der Blasventile und auch durch andere Toträume innerhalb der Blasvorrichtung wie beispielsweise auf 40 bar ausgelegte Leitungen etc. ergeben sich erhebliche Blasgas- und Strömungsverluste bzw. ist es notwendig, erheblich mehr Blasgas oder Blasgas mit einem höheren Anfangsdruck bereitzustellen, als für das Blasen tatsächlich notwendig, was zu erheblichen Zusatzkosten beim Blasen der Behälter führt. Weiterhin ist es notwendig in einer Hysterese um den notwendigen Blasdruck herum die Kompressoren zu betreiben, sodass regelmäßig über den notwendigen Blasdruck das Blasgas komprimiert werden muss.

Die Toträume gewinnen überproportional an Bedeutung, je kleiner die Behälter sind, die geblasen werden sollen. Je nach Behältergröße sind Totvolumina bis zu dem 50-fachen des Volumens des fertigen Behälters möglich.

Eine Reduktion der Blasgasverluste, insbesondere durch eine Reduktion der Toträume würde zu einer relevanten Kostenreduktion beim Blasen von Behältern führen.

Aus der DE 10 2013 103 543 A1 sind bereits ein Verfahren und eine Vorrichtung zur Blasverformung von Vorformlingen aus einem thermoplastischen Material in Behälter bekannt. Die Vorformlinge werden unter Verwendung von Reckstangen gereckt und anschließend durch einen Blasdruck expandiert.

Ähnliche Verfahren und Vorrichtungen zur blasstechnischen Umformung von Vorformlingen in Behälter werden auch in der US 2004/1739 49 A1 und der EP 2052 843 A2 beschrieben.

Aufgabe der Erfindung ist es, eine Vorrichtung und ein Verfahren zum Blasen und Behältern zu schaffen, mit denen die vorgenannten Nachteile überwunden werden.

Die Aufgabe wird hinsichtlich der Vorrichtung dadurch gelöst, dass der Reckstangenantrieb den Verdichter zum Bereitstellen des Blasgases antreibt.

Hierdurch wird es auf einfache Weise möglich, die zuvor genannten Nachteile zu überwinden. Weiterhin wird es auf einfache Weise möglich, den Bau von Blasmaschinen zu vereinfachen, weil vorhandene Komponenten (z.B. Reckstangenantrieb, Frequenzumrichter, Steuerung) auch für den Antrieb des Verdichters des Blasgases genutzt werden kann.

Bedingt durch die lokale Hochdruckerzeugung des Blasgases in der Vorrichtung selber wird es möglich, auf eine zentrale Hochdruckblasgaserzeugung mittels Kompressors zu verzichten. Dementsprechend ist es nicht notwendig, ein Verteilungssystem für das Hochdruckblasgas bereitzustellen. Somit ist es ausreichend, die Blasvorrichtung lediglich an ein "normales" Gasdrucknetz (genannt Arbeitsdruck oder Niederdruck) mit Drücken in Höhe von 5-10 bar vorzusehen. Eine Kompression dieses Blasgases in der Vorrichtung ermöglicht den Verzicht auf kostenintensive Hochdruckkomponenten oder deren Vereinfachung, insbesondere teilweise auch auf den Verzicht von Blasventilen, was zu einer erheblichen Reduktion der Toträume und Blasdruckverluste in der Blasvorrichtung führt.

Der Wegfall des Hochdrucknetzes spart auch den Mehrverbrauch durch den Wegfall der für den Betrieb der Kompressoren notwendigen Schalt-Hysterese ein. Um einen benötigten minimalen Blasdruck von z.B. 35 bar sicherzustellen, schalten die Kompressoren bei 35 bar ein und bei 38 bar aus, obwohl der höhere Druck prozesstechnisch nicht notwendig ist.

Weiterhin wird es durch die lokale Druckerzeugung in der Blasvorrichtung möglich, unterschiedliche Drücke als Expansionsdrücke für die Behälter in Abhängigkeit der Behältergeometrie bereitzustellen, wodurch es möglich wird, beispielsweise niedrigere Drücke im Blasgas zum Blasen einzustellen, was ebenfalls zu einer Kostenreduktion führt. Die Blasvorrichtung kann unabhängig von einem vorgegebenen Netzdruck den minimal notwendigen Druck für den jeweiligen zu erzeugenden Behälter über die jeweiligen Prozesssteuerungen vorsehen. Ein solches Vorgehen war bisher nicht möglich, da bedingt durch das Hochdrucknetz der Druck vorgegeben war und niedrigere Drücke lediglich über Druckminderer erreicht werden konnten, was wiederum zu zusätzlichen Kosten führte.

Bei einem Hochdrucknetz für Blasmaschinen definiert bisher die anspruchsvollste Anwendung (beispielsweise das deutliche Ausformen von feinen Oberflächenstrukturen oder von komplexen Geometrien) die maximale Höhe des Systemdrucks. Der hohe Blasdruck liegt dann allerdings auch an anderen Blasmaschinen mit Anwendungen an, bei denen eigentlich ein geringerer Blasdruck ausreichend wäre. Hier muss ggf. lokal der Druck sogar gedrosselt werden. Weiterhin steigen bei der Drucklufterzeugung die Energiekosten proportional zum Druckniveau an. Daher ist es hier vorteilhaft, wenn beispielsweise wechselnde oder andere Materialien (z.B. Polypropylen) im Streckblasverfahren verarbeitet werden oder eine alternative Prozessfindung bzw. Prozessoptimierung erforderlich wird, dass eine variable ggf. softwarebasierte Verstellung des Blasdrucks möglich ist. Dieses stellt eine deutliche Hilfe für den Maschinenbediener dar.

Eine weitere vorteilhafte Lehre sieht vor, dass der Verdichter das Blasgas mittels einer Linearbewegung und/oder einer Rotationsbewegung bereitstellt. Hierdurch sind verschiedene für das jeweilige Blasen vorteilhafte Verdichter einsetzbar. Beispielhaft und nicht abschließend genannt seien Kolben-, Doppelkolben- oder Radialkolbenverdichter. Insbesondere lässt sich hierdurch Spülluft für eine mögliches Kühlen bei der Herstellung von Behältern beispielsweise Sonderprozesse wie das Hotfillverfahren auf einfache Weise bereitstellen.

Eine weitere vorteilhafte Lehre sieht vor, dass der Verdichter wenigstens einen Kolben mit einer Kolbenstange und wenigstens einen Zylinder aufweist. Es hat sich herausgestellt, dass ein Kolbenverdichter besonders gut in den Reck-Blasprozess integrierbar ist.

Eine weitere vorteilhafte Lehre sieht vor, dass die Kolbenstange mit der Reckstange verbunden ist, bevorzugt über eine Kupplung. Hierdurch wird es auf einfache Weise möglich, mehr als einen Verdichtungshub für das Blasgas vorzunehmen.

Eine weitere vorteilhafte Lehre sieht vor, dass die Kolbenstange einen Überströmabschnitt zur Abgabe des Blasgases aus dem Zylinder an die Blasdüse aufweist. Hierbei handelt es sich um eine einfache und sehr integrierte Möglichkeit, die Übergabe des Blasgases an die Blasdüse, besonders auch gesteuert bzw. angepasst an die notwendige Blaskurve, zu realisieren. Hierbei ist es vorteilhaft, dass der Überströmabschnitt so ausgeführt und angeordnet ist, dass die Blasgasabgabe direkt an die Blasdüse erfolgt.

Eine weitere vorteilhafte Lehre sieht vor, dass der Verdichter über eine Leitung mit der Blasdüse verbunden ist, die bevorzugt wenigstens ein Ventil aufweist. Hierbei handelt es sich um eine einfache und sehr integrierte Möglichkeit, die Übergabe des Blasgases an die Blasdüse, besonders auch gesteuert bzw. angepasst an die notwendige Blaskurve, zu realisieren. Auch wird es auf einfache Weise möglich, mehr als einen Verdichtungshub für das Blasgas vorzunehmen.

Eine weitere vorteilhafte Lehre sieht vor, dass der Verdichter über eine Leitung mit der Blasdüse verbunden ist, die mit einem Blasgasspeicher verbunden ist, wobei der Blasgasspeicher bevorzugt über wenigstens ein Ventil von der Blasdüse und/oder dem Verdichter trennbar ist. Hierdurch wird es auf einfache Weise möglich, mehr als einen Verdichtungshub für das Blasgas vorzunehmen, um den notwendigen Blasdruck insbesondere bei einer kleineren Baugröße des Verdichters zu erreichen.

Eine weitere vorteilhafte Lehre sieht vor, dass der Vorformling eine Mündung aufweist, die in einer Hülse, bevorzugt einer Transporthülse, angeordnet ist, oder dass der Vorformling von einer Zange zum Transport gehalten ist. Aufgrund der Anforderungen an das Recken bei Vorformlingen mit kleineren Mündungsdurchmessern hat sich das Vorsehen einer Transporthülse als vorteilhaft erwiesen, da die Öffnung des Vorformlings frei ist, um die Reckstange in den Vorformling einzubringen, sodass diese den größtmöglichen Durchmesser aufweisen kann, was das Recken erleichtert. Alternativ kann der Vorformling für sich auch beispielsweise über Schienensysteme und Greifer von der Heizung in die Blasstation geführt werden.

Eine weitere vorteilhafte Lehre sieht vor, dass die Reckstange über einen Spindelantrieb, Zahnstangenantrieb, einen Magnetfeldantrieb und/oder einen Zahnriemenantrieb bewegbar ist, der mit dem Verdichter zu dessen Antrieb verbunden ist.

Eine weitere vorteilhafte Lehre sieht vor, dass eine Verbindung zwischen dem Verdichter und einem Innenraum des Behälters vorgesehen ist. Hierdurch kann der Behälter auf einfache Weise gespült werden.

Eine weitere vorteilhafte Lehre sieht vor, dass der Reckstangenantrieb den Verdichter zusammen mit der Bewegung der Reckstange zum Bereitstellen des Blasgases antreibt.

Ein Verfahren zum Betrieb der Vorrichtung in einer ersten Variante dadurch realisiert, dass das Blasgas von einem Verdichter bereitgestellt wird, der von einem Antrieb angetrieben wird, dass die Reckstange von einem Antrieb angetrieben wird, und dass die Reckstange und der Verdichter von dem Antrieb zusammen angetrieben werden. Eine weitere vorteilhafte Lehre sieht vor, dass das in den geformten Behälter eingebrachte Blasgas von dem Verdichter aus dem Behälter entfernt wird. Eine weitere vorteilhafte Lehre sieht vor, dass der Verdichter und die Reckstange über eine Kupplung getrennt und verbunden werden. Eine weitere vorteilhafte Lehre sieht vor, dass die Verdichtung des Blasgases wenigstens teilweise vor dem Beginn des Einbringens der Reckstange in den Vorformling erfolgt. Eine weitere vorteilhafte Lehre sieht vor, dass das wenigstens teilweise komprimierte Blasgas in einem Blasgasspeicher zwischengespeichert wird. Eine weitere vorteilhafte Lehre sieht vor, dass der Verdichter fluidisch mit einer Blasdüse der Blasform verbunden ist, und dass die Verbindung über das Betätigen wenigstens eines Ventils mit getrennt und verbunden wird. Hierdurch lassen sich die zuvor bereits genannten Vorteile erreichen.

Ein Verfahren zum Betrieb der Vorrichtung in einer weiteren Variante wird dadurch realisiert, dass in den geformten Behälter eingebrachte Blasgas von einer Pumpe aus dem Behälter entfernt wird. Eine weitere vorteilhafte Lehre sieht vor, dass es sich bei der Pumpe um einen Verdichter handelt. Eine weitere vorteilhafte Lehre sieht vor, dass der Verdichter von einem Antrieb angetrieben wird, dass die Reckstange von einem Antrieb angetrieben wird, und dass die Reckstange (20) und der Verdichter von dem Antrieb zusammen angetrieben werden. Eine weitere vorteilhafte Lehre sieht vor, dass der Verdichter und die Reckstange über eine Kupplung getrennt und verbunden werden. Eine weitere vorteilhafte Lehre sieht vor, dass die Verdichtung des Blasgases wenigstens teilweise vor dem Beginn des Einbringens der Reckstange in den Vorformling erfolgt. Eine weitere vorteilhafte Lehre sieht vor, dass das wenigstens teilweise komprimierte Blasgas in einem Blasgasspeicher zwischengespeichert wird. Eine weitere vorteilhafte Lehre sieht vor, dass der Verdichter fluidisch mit einer Blasdüse der Blasform verbunden ist, und dass die Verbindung über das Betätigen wenigstens eines Ventils mit getrennt und verbunden wird.

Die erfindungsgemäße Vorrichtung lässt sich besonders gut bei Vorformlingen mit Mündungsdurchmessern von 6 bis 24 mm und bei Volumina von 10 bis 250 ml zu blasende Behältergröße einsetzen.

Weiterhin relevant für die Erfindung sind zusätzlich die Aspekte Temperierung und Transport in der Vorrichtung.

Bei einigen Blasmaschinen des Standes der Technik werden die Vorformlinge auf sogenannte Transportdorne gesteckt. Diese werden zusammen mit den Vorformlingen und laufen auf diesen durch die Blasvorrichtung, insbesondere durch die Heizstrecke der Blasvorrichtung. Hierbei rotieren die Transportdorne beispielsweise, um den Vorformling gleichmäßig aufzuheizen. Anschließend werden die Vorformlinge auf dem Dorn oder vereinzelt ohne Dorn der Blaspresse zugeführt. Insbesondere bei kleinen Mündungen mit einem Innendurchmesser >6mm ist bei Verwendung von Transportdornen kein Raum vorhanden, um eine Reckstange in den Vorformling einzuführen. Weiterhin führt das Vorsehen einer Halterung in dem Vorformling zu kleinen Reckstangendurchmessern. Diese führen beim Verstrecken des Vorformlings dazu, dass die Reckstange durch die Kuppe des Vorformlings sticht. Daher ist es ein weiterer Aspekt der Erfindung, ein Recken von Vorformlingen mit kleinem Innendurchmesser >6mm der Öffnung des Vorformlings zu ermöglichen. Hierfür sieht die Erfindung vor, dass die Vorformlinge stattdessen in einer Transporthülse eingesetzt werden. Vorteilhaft dabei ist, dass die Mündung des Vorformlings vor Verformungen geschützt wird, während der Vorformling in der Hülse durch die Blasmaschine, insbesondere durch die Heizstrecke gefördert wird. Weiterhin wird es auch bei kleinen Öffnungsdurchmessern möglich, mit der Reckstange in den Vorformling einzugreifen. Generell ist auch das Verwenden von Haltezangen möglich.

Beim Durchlauf der Heizstrecke müssen die Vorformlinge in den Transporthülsen mit einer gleichmäßigen Bewegung durch den Ofen geführt werden. Weiterhin ist ein Rotieren dabei vorteilhaft. Es hat sich gezeigt, dass ausschlaggebend für die Effizienz und Länge der Heizstrecke der Abstand der Vorformlinge ist. Je größer der Abstand der Vorformlinge ist, umso mehr wird die in der Heizstrecke abgegebene IR-Strahlung gestreut und geht somit für den Temperierprozess verloren. Dieses ist insbesondere bei kleinen zu blasenden Behältern problematisch. Es hat sich gezeigt, dass eine Möglichkeit gerade bei kleinen Behältern eine Anpassung der Größe des Heizsystems ist, insbesondere durch ein Reduzieren der Heizebenen. Weiterhin ist vorteilhaft, den Abstand der Vorformlinge an den Öffnungsdurchmesser der Vorformlinge anzupassen. In Bezug auf die Transporthülsen bedeutet dieses, dass die Vorformlinge gleichmäßig rotierend und mit einem gleichmäßigen Vorschub durch die Heizstrecke laufen. Der entscheidende Vorteil der Transporthülse ist der Schutz der Mündung vor IR-Strahlung um ein Verformen und Aufblasen der Mündung zu verhindern.

Im Anschluss an die Heizstrecke müssen die Vorformlinge in den Transporthülsen steckend von einem kontinuierlichen Durchlauf durch die Heizstrecke in die taktende Blaspresse überführt werden. Es hat sich gezeigt, dass hierzu der Abstand der Vorformlinge zueinander vergrößert werden muss. Der möglichst enge und damit energieeffiziente Abstand in der Heizstrecke muss je nach Behälterform/Vorformlingform bei Verwendung von Mehrfachblasformen vergrößert werden, damit diese in der Blasstation in die Blasform übergeben werden kann.

Erfindungsgemäß wird die notwendige Längsbewegung der Reckstange auch für die Kompression/Verdichtung des Blasgases verwendet. Die Reckstange sorgt im Streckblasprozess dafür, dass der erwärmte Vorformling in Längsrichtung gestreckt wird, während das Blasgas den Vorformling aufbläst, bevorzugt auch gleichzeitig. Ohne das Recken in Längsrichtung verbleibt würde das meiste Material des Vorformlings an der Behälterschulter, weil es nicht in Richtung des Behälterbodens verschoben wurde.

Das bei der Einleitung und Durchführung der Reckbewegung komprimierte Blasgas wird über die Blasdüse in den Vorformling eingeleitet. Bei einer ersten Ausführungsform sind für das Austreten der komprimierten Blasgas aus dem Verdichter, bevorzugt eine Zylinderanordnung/Kolbenanordnung, Überströmkanäle an/in der Reckstange vorgesehen. Alternativ kann stattdessen für eine zweite Ausführungsform wenigstens eine Verbindungsleitung zwischen Zylinder und Blasdüse vorgesehen sein, die bevorzugt auch mit wenigstens einem Ventil absperrbar ist. In dieser Leitung kann zusätzlich auch ein Speicher für das Blasgas vorgesehen sein, der ebenfalls mit wenigstens einem Ventil gegenüber dem Zylinder und/oder gegenüber der Blasdüse absperrbar ist. In diesem kann komprimiertes Blasgas zwischengespeichert werden, während ein weiterer Hub oder mehrere weitere Hübe des Kolbens erfolgen, bevor das verdichtete Blasgas an die Blasdüse abgegeben wird. Das komprimierte Blasgas wird über diese und/oder durch diese zum richtigen Zeitpunkt in den erwärmten Vorformling eingebracht und bläst diesen zum Behälter.

Folgende Prozessschritte sind dabei vorteilhaft:

### A) Verdichtung Blasgas, Ausfahren der Reckstange

Der Zylinderraum wird entweder mit Gas mit Umgebungsdruck gefüllt oder wird mit Blasgas mit einem Druck von 5 bis 12 bar, bevorzugt 8 bis 10 bar, gefüllt. Dieses Blasgas wird dann über ein externes Gasnetz mit dem entsprechenden Druck bereitgestellt und wird beispielsweise energieeffizient über Schraubenkompressoren erzeugt. Ein an die Reckstange oder an das Recksystem bevorzugt über eine Kupplung anschließbarer Kolben komprimiert das Blasgas mit Umgebungsdruck oder das vorverdichtete Blasgas auf einen maximalen Blasdruck von ca. 20 bis 38 bar. Dieses kann mit einem oder auch mehreren Hüben des Kolbens erfolgen. Können die Behälter aufgrund der einfacheren Geometrie oder des ausgewählten Vorformlings mit einem geringeren Blasdruck aufgeblasen werden, so fährt der Kolben, bevor die Blasgas einströmt, weiter vor, um ein kleineres Zylindervolumen zu befüllen. So kann der Blasdruck individuell und einfach an den zu blasenden Behälter angepasst werden, was den Gesamtenergieverbrauch senkt. Die Reckstange wird mit dem Kolben gekoppelt und vorgefahren, der Kolben komprimiert das Blasgas. Die Reckstange taucht in den Vorformling ein.

### B) Beginn der Vorformlingversteckung, Überströmen der verdichteten Blasgas in den (erwärmten) Vorformling

Sobald die Reckstange die Kuppe des Vorformlings berührt, strömt das komprimierte Blasgas über die Überströmkanäle oder die geöffnete Leitung in den erwärmten Vorformling und beginnt ihn in Längsrichtung zu verstrecken, wobei er gleichzeitig durch das Blasgas aufgeblasen wird.

### C) Ende der Verstreckung

Die Reckstange ist am Boden der Blasform angekommen und kommt zum Stillstand. Bei unterschiedlich langen Behältern kann lediglich das dünne Ende der Reckstange entsprechend angepasst und gewechselt werden und/oder der Reckstangenhub kann über den Reckstangenantrieb verändert werden. Gleichzeitig erfolgt das finale Blasen des Behälters.

### D) Zurückfahren der Reckstange, Entlüftung des Behälters, Blasgasrecycling

Hierfür gibt mehrere, nicht abschließend aufgezählte mögliche Varianten:
1. Ohne Vorfüllung des Zylinders mit Druckluft
   Die Reckstange fährt zurück, wobei der Kolben bzw. der Verdichter den gerade geblasenen Behälter aktiv bis zum Umgebungsdruck entlüftet. Es muss hierbei verhindert werden, dass kein Unterdruck entsteht und der Behälter kollabiert. Danach trennt sich die Flaschenmündung von der Blasdüse und der Kolben fährt in die ursprüngliche Startposition zurück.
2. Mit Vorfüllung des Zylinders mit Druckluft (beispielsweise Arbeitsluft mit 5 bar bis 10 bar) über ein Rückschlagventil
   Die Reckstange fährt zurück, wobei der Kolben bzw. der Verdichter den gerade geblasenen Behälter aktiv bis zum am Rückschlagventil anliegenden Fülldruck (in der Regel 5-10 bar) entlüftet. Danach schließt das Blasventil und die Flaschenmündung trennt sich von der Blasdüse und entlüftet den Behälter. Alternativ kann die Restentlüftung des Behälters von Fülldruck auf Umgebungsdruck über ein Entlüftungsventil an der Blasdüse erfolgen. Bei dem Blasgas im Zylinder handelt es sich um das sogenannte recycelte Blasgas, wodurch eine entsprechende Energieersparung erreichbar ist. Anschließend fährt der Kolben in die ursprüngliche Ausgangsposition zurück, wobei über das Rückschlagventil der Zylinder mit der anliegenden Arbeitsluft (Fülldruck) gefüllt wird.
3. Mit Vorfüllung des Zylinders mit Druckluft (beispielsweise Arbeitsluft mit 5 bar bis 10 bar) über ein zuschaltbares Füllventil
   Die Reckstange fährt zurück, wobei der Kolben bzw. der Verdichter den gerade geblasenen Behälter aktiv bis zur ursprünglichen Startposition des Kolbens bzw. des Verdichters entlüftet. Danach schließt das Blasventil und die Flaschenmündung trennt sich von der Blasdüse und entlüftet den Behälter. Alternativ kann die Restentlüftung des Behälters von Fülldruck auf Umgebungsdruck über ein Entlüftungsventil an der Blasdüse erfolgen. Bei dem Blasgas im Zylinder handelt es sich um das sogenannte recycelte Blasgas, wodurch eine entsprechende Energieersparung erreichbar ist. Anschließend öffnet das Füllventil, wobei der Zylinder mit der anliegenden Arbeitsluft (Fülldruck) gefüllt wird.

Das jeweilige aktive Entlüften des Behälters z.B. über das Zurückfahren des Kolbens bringt gerade gegen Ende des Entlüftungsvorgangs, wenn die Differenzdrücke niedrig sind, eine Zykluszeitreduzierung und über das beschriebene Luftrecycling eine Energieeinsparung.

Beim Zurückfahren der Reckstange, entlüftet die Pumpe bzw. der Kolben bzw. der Verdichter den Behälter aktiv beispielsweise bis zu einem gewissen Restdruck <10bar. Hierbei muss, falls erforderlich, der Kolben gebremst werden. Die Restentlüftung des Behälters kann auch erfolgen, wenn die Transporthülse den Anschlusskolben verlässt. Die Transporthülse fördert den Behälter aus der Blasform in Richtung Behälterausgabe.

Alternativ kann eine oder mehrere Reckstangen (bei Nutzung von Mehrfachblasformen) an eine servoelektrisch angetriebene Traverse befestigt werden, über die auch ein Zylinder zur Verdichtung des Blasgases angetrieben wird.

Verdichter und Kompressor werden im Sinne der Erfindung als begriffliche Äquivalente angesehen.

Die Prozesszeiten einer Blasmaschine erlauben eine oder mehrere Zwischenhübe, beispielsweise während der Bewegung der Blasformen (Öffnen/ Schließen) und der Transferzeiten (Zeiten für den Transport des Vorformlings in die Blasform und der Flasche aus der Blasform). Durch die Verwendung von Zwischenhüben kann der Verdichter/Zylinder kleiner dimensioniert werden.

Nachfolgend wird die Erfindung anhand von Ausführungsbeispielen in Verbindung mit Zeichnungen näher erläutert. Dabei zeigen:
- Fig. 1 bis 4: schematische Schnittansichten einer ersten Ausführungsform der erfindungsgemäßen Vorrichtung und des erfindungsgemäßen Verfahrens,
- Fig. 5 bis 11: schematische Schnittansichten einer zweiten Ausführungsform der erfindungsgemäßen Vorrichtung und des erfindungsgemäßen Verfahrens,
- Fig. 12 bis 15: schematische Schnittansichten einer dritten Ausführungsform der erfindungsgemäßen Vorrichtung und des erfindungsgemäßen Verfahrens; insbesondere gezeigt wird das Wiederbefüllen des Zylinders ("Pumpen") vor dem Blasschritt, um beispielsweise einen Druckspeicher zu laden,
- Fig. 16 bis 18: schematische Schnittansichten der zweiten Ausführungsform der erfindungsgemäßen Vorrichtung mit einer weiteren alternativen Ausführungsform des erfindungsgemäßen Verfahrens, um einen Zwischenhub während des Blasprozesses durchführen zu können,
- Fig. 19: eine schematische Schnittansicht einer vierten Ausführungsform der erfindungsgemäßen Vorrichtung und des erfindungsgemäßen Verfahrens,
- Fig. 20: eine schematische Schnittansicht einer fünften Ausführungsform der erfindungsgemäßen Vorrichtung und des erfindungsgemäßen Verfahrens,
- Fig. 21: eine schematische Draufsicht auf eine erfindungsgemäße Vorrichtung zu Blasformung von Behältern, und
- Fig. 22, 23: eine schematische Schnittansicht einer sechsten Ausführungsform der erfindungsgemäßen Vorrichtung und des erfindungsgemäßen Verfahrens.

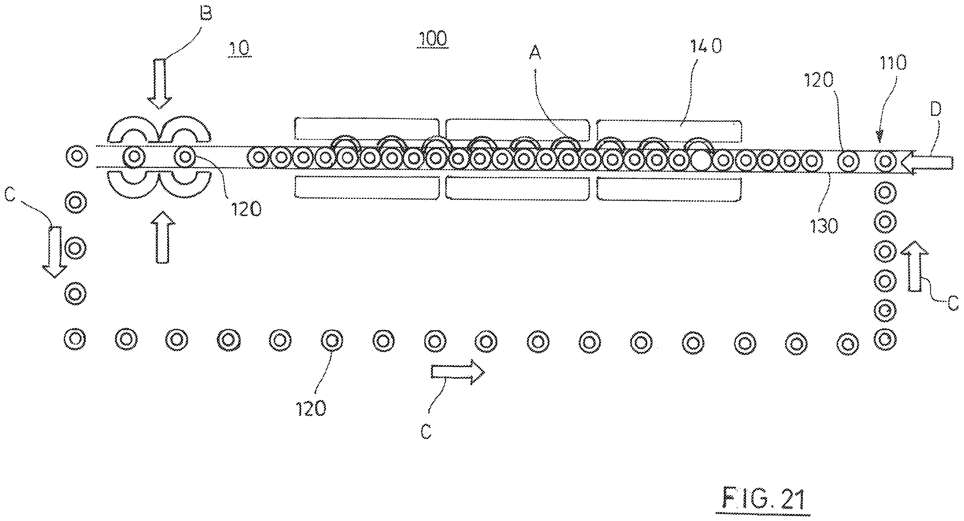

Figur 21 zeigt eine schematische Draufsicht auf eine erfindungsgemäße Vorrichtung 100 zu Blasformung von Behältern. In einer Vorformlingeingabe 110 werden vor Vorformlinge 11 in Halte- und Transportmittel 120 eingesetzt (Pfeilrichtung D). Diese Halte- und Transportmittel 120, hier bevorzugt in Form von Transporthülsen 120, werden in geeigneter Weise, beispielsweise auf Transportschienen 130 zur Temperierung der Vorformlinge 11 durch Heizkästen 140 transportiert. Hierbei ist es vorteilhaft, dass die Vorformlinge 11 und damit die Transporthülsen 120 innerhalb der Heizkästen 140 möglichst dicht beieinander angeordnet sind, um Streuverluste der abgegebenen Wärme zu reduzieren. Es hat sich als vorteilhaft erwiesen, wenn die Vorformlinge 11 zusammen mit den Halte- und Transportmitteln 120 beispielsweise in Form von Transporthülsen 120 in den Heizkästen 140 rotieren, wie dies mit den Pfeilen A in Figur 21 dargestellt ist. Hinter den Heizkästen 140 findet die Übergabe der Vorformlinge 11 zusammen mit den Halte- und Transportmitteln 120 in die Blasstation 10 statt. Die in den Heizkästen eng angeordneten Vorformlinge 11 müssen hierbei so vereinzelt werden, dass sie passend, wie dieses in Figur 21 dargestellt ist, in den entsprechenden Blasformen 12, die hier schematisch in zwei Teilen 13, 14 dargestellt sind, einsetzbar sind. Die Blasformteile 13, 14 werden zur Durchführung des Blasens der Behälter in Pfeilrichtung B zur Blasform 12 zusammengesetzt. Das Blasen der Behälter selber erfolgt dabei unter Zuhilfenahme der verschiedenen erfindungsgemäßen Ausführungsformen der Reckstangen 20 und deren Antriebe unter Zuhilfenahme von Blasgas. Beispielhaft sind in der in Figur 21 gezeigten Blasstation 10 zwei Blasformen 12 hintereinander angeordnet. Nach der Blasformung der Behälter werden diese in der Blasstation 10 ausgegeben und die Halte- und Transportmittel/Transporthülsen 120 werden in Pfeilrichtung C der Eingabe 110 für die Vorformlänge 11 wieder zugeführt, sodass diese umlaufend vorgesehen sind.

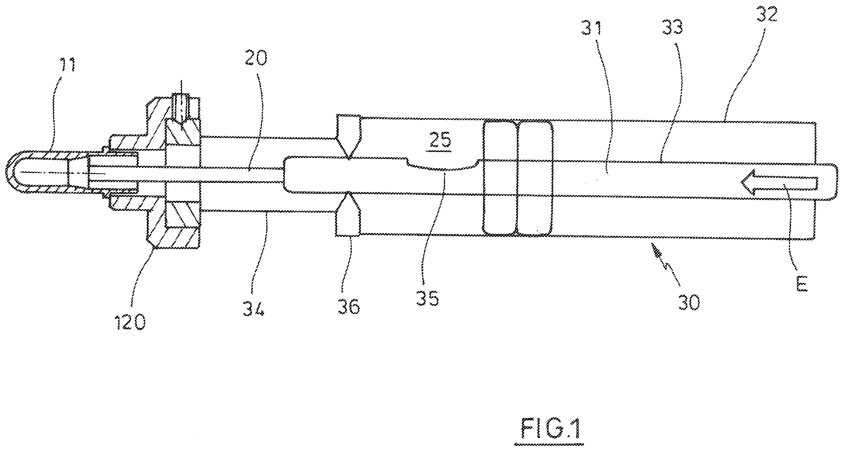

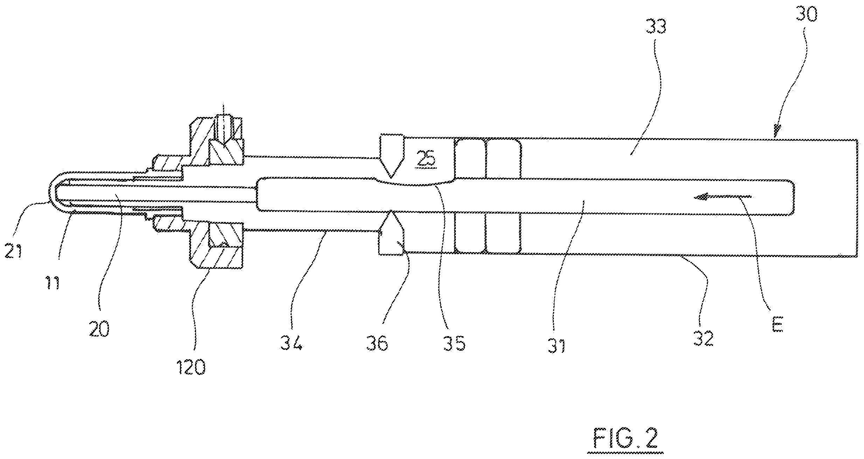

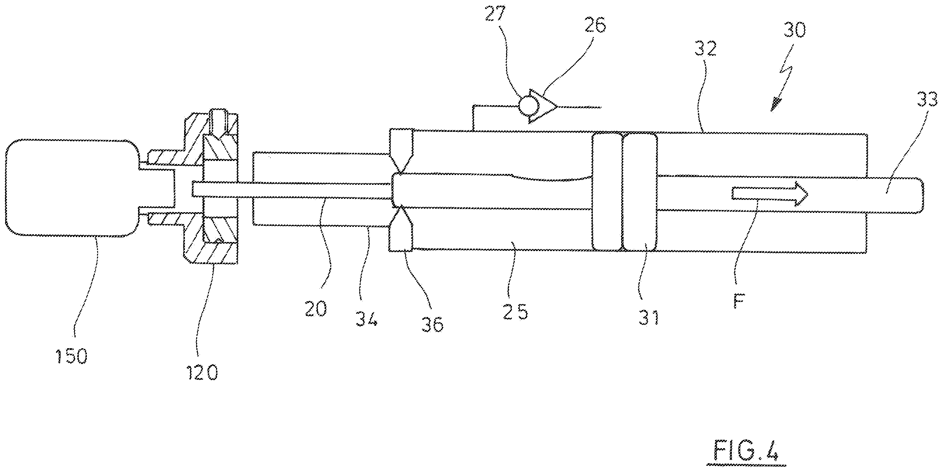

Die Figuren 1 bis 4 zeigen eine erste erfindungsgemäße Ausführungsform. Hierbei vorgesehen ist ein Verdichter 30 mit einem Zylinder 32 und einem Kolben 31, der eine Kolbenstange 33 aufweist, die eine Verbindung mit der Reckstange 20 vorsieht. Die Kolbenstange 33 und damit auch die Reckstange 20 sind mit einem Antrieb (nicht dargestellt) verbunden. Die Kolbenstange 33 in Verbindung mit der Reckstange 20 sind über diesen Antrieb in Pfeilrichtung E und entgegen der Pfeilrichtung E in Pfeilrichtung F bewegbar. An dem der Reckstange 20 zugewandten Ende des Zylinders 32 sind Kolbenstangendichtungen 36 zur Abdichtung der Kolbenstange 33 gegenüber dem Zylinder 32 vorgesehen. Hinter den Kolbenstangendichtungen 36 ist ein Anschlusskolben/eine Blasdüse 34 vorgesehen. Die Blasdüse 34 greift in die Transporthülsen 120 ein, in die der Vorformling 11 eingesetzt ist. Die Kolbenstange 31 weist einen Überströmkanal 35 als Überströmöffnung auf.

Wird die Kolbenstange 33 des Kolben 31 des Verdichters 30 in Pfeilrichtung E bewegt, so tritt die daran angekoppelte Reckstange 20 in den Vorformling 11 ein. Vor dem Kolben 31 im Zylinder 32 befindet sich Blasgas 25. Passiert der Überströmkanal 35 die Kolbenstangendichtung 36, so tritt das komprimierte Blasgas 25 aus dem Zylinder 32 in den Anschlusskolben 34, weiter durch die Transporthülse 120 hindurch in den Vorformling 11 ein.

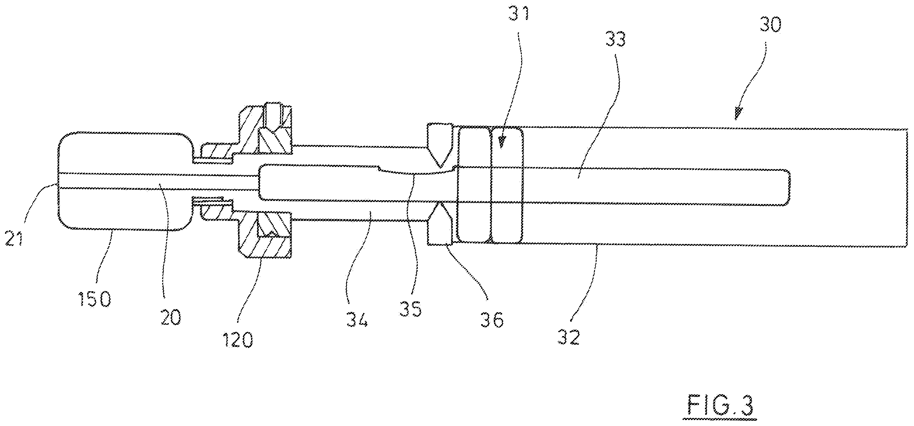

Berührt die Spitze 21 der Reckstange 20 die Kuppe 15 des Vorformlings 11 beginnt der Reckvorgang des Vorformlings 11 in Pfeilrichtung E, wenn die Reckstange 20 in Pfeilrichtung E weiterbewegt wird. Das bereits zwischen Vorformling 11 und Reckstange 20 befindliche komprimierte Blasgas 25 verhindert, dass beim Recken das Material des Vorformlings 11 an die Reckstange 20 schrumpft. Das komprimierte Blasgas 25 wird bei der fortgesetzten Bewegung der Kolbenstange 33/der Reckstange 20 in Pfeilrichtung E weiter in Richtung des Vorformlings 11 bewegt und komprimiert, bis eine Endposition (siehe Figur 3) erreicht ist. Zu diesem Zeitpunkt bewirkt das komprimierte Blasgas 25 die Expansion des Vorformlings 11 hin zum Behälter 150. Anschließend wird die Kolbenstangen 33 in Pfeilrichtung F zusammen mit dem Kolben 31 und der Reckstange 20 in die Ausgangsposition zurückbewegt, wodurch eine Rückführung des Blasgases 25 in den Zylinder 32 erfolgt. Wenn der Überströmkanal 35 die Kolbenstangendichtung 36 passiert hat, und die Kolbenstangendichtung 36 die Kolbenstange 33 wieder abgedichtet, wird der Zylinder 32 vor dem Kolben 31 über eine Blasgaszufuhr 26 mit vorkomprimierten Blasgas 25 (mit 8-12 bar bevorzugt 8 bis 10 bar) gefüllt.

Weiterhin wird die Blasdüse 34 von der Transporthülse 120 gelöst, sodass die Transporthülse 120 und der Innenraum des Behälters 150 sowie der Innenraum Transporthülse 120 entspannt werden, indem das restliche ggf. noch unter Druck stehende Blasgas entweichen kann, ggf. auch über ein Blasventil (nicht dargestellt). Anschließend wird die Transporthülse 120 mit dem fertigen Behälter 150 entnommen.

Die Geometrie der Überströmkanäle 35 kann bevorzugt eine auf den jeweiligen zu fertigenden Behälter 150 angepasste Blaskurve bereitstellen.

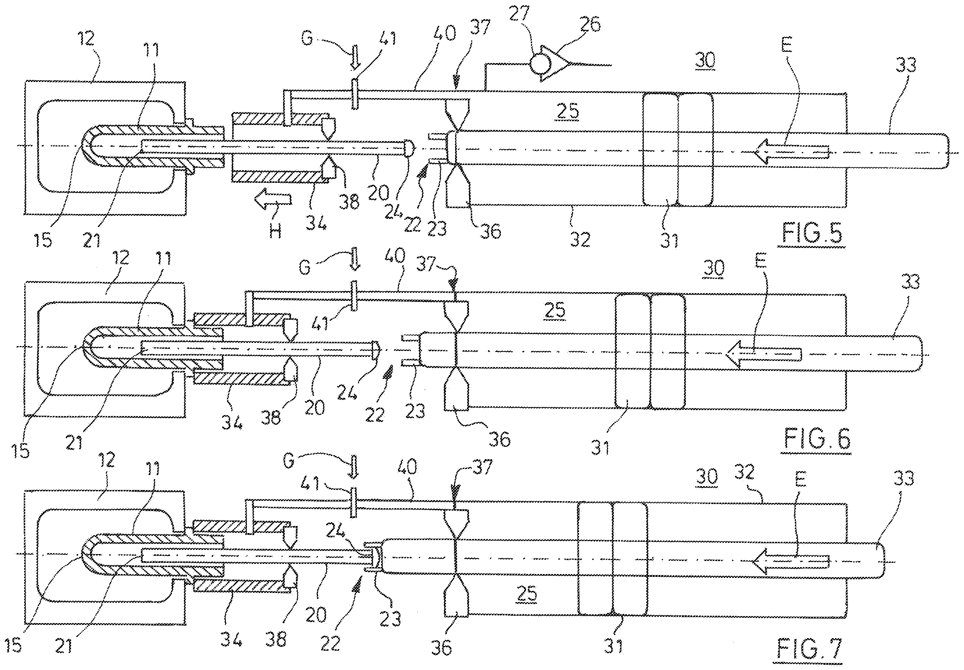

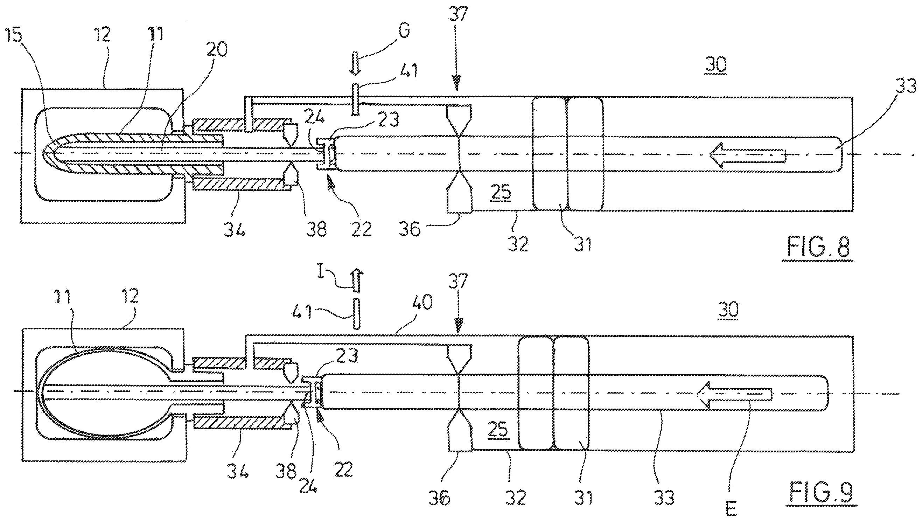

Die Figuren 5-11 zeigen eine weitere Ausführungsform der erfindungsgemäßen Vorrichtung bzw. des erfindungsgemäßen Verfahrens.

Hierbei ist wiederum ein Verdichter 30 in Verbindung mit einer Blasformen 12 und einer Reckstange 20 gezeigt. Reckstange 20 und Verdichter 30 sind mit einem nicht dargestellten Antrieb, beispielsweise einem linearen Antrieb, verbunden/verbindbar. Die Reckstange 20 ist über eine Kupplung 22 lösbar mit der Kolbenstange 33 des Verdichters 30 verbunden. Die Kupplung 22 kann beispielsweise/bevorzugt als Rundklinkenzug ausgeführt werden.

Der Verdichter weist hier wiederum einen Kolben 31 in Verbindung mit der Kolbenstange 33 auf, die in einem Zylinder 32 angeordnet sind. Die Kolbenstange 33 verlässt den Zylinder abgedichtet über eine Kolbenstangendichtung 36 und wird von dieser geführt. Der Zylinder 32 wird befüllt mit Blasgas 25 über eine Blaszufuhr 26, die ein Rückschlagventil 27 aufweist. Anstelle des Rückschlagventils (27) kann auch alternativ ein zuschaltbares Füllventil (nicht dargestellt) verwendet werden. Der Zylinder 32 weist eine Öffnung 37 auf, an die eine Leitung 40 angeschlossen ist. In der Leitung 40 ist ein Ventil 41 vorgesehen, dass in Pfeilrichtung I die Leitung 40 öffnet und in Pfeilrichtung G die Leitung 40 schließt. Die Leitung 40 ist mit dem in Pfeilrichtung H beweglichen Anschlusskolben/Blasdüse 34 verbunden. Der Anschlusskolben/Blasdüse 34 bewegt sich solange in Pfeilrichtung H, bis er die Öffnung (Mündung) des temperierten Vorformlings 11 gegenüber dem später einströmenden Blasgas abdichtet. Durch den Anschlusskolbens 34 wird die Reckstange 20 geführt. Sie bewegt sich durch eine Blasdüsendichtung 38 ebenfalls in Pfeilrichtung H. Der temperierte Vorformling 11 befindet sich in einer Blasform 12. Im Unterschied zu Fig. 1 bis Fig. 4 wird der Vorformling 11 beispielsweise über ein System von Greifen in die Blasform bewegt, ohne notwendigerweise in einer Transporthülse 120 zu stecken.

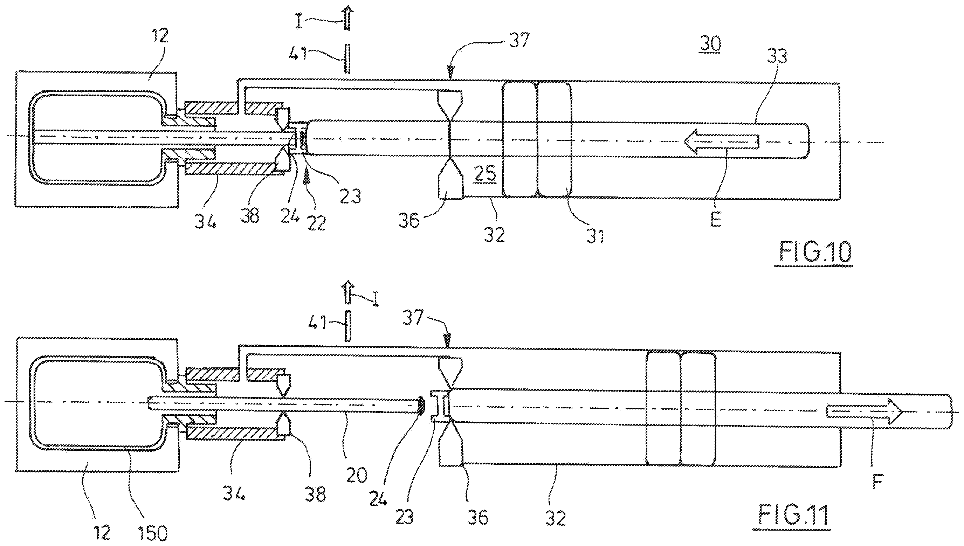

Nach Befüllen des Zylinders 32 mit Blasgas 25 wird die Kolbenstange 33 über einen nicht dargestellten Antrieb in Pfeilrichtung E bewegt und das Blasgas 25 wird komprimiert. Am vorderen Ende der Kolbenstange 33 ist ein erstes Kupplungsteil 23 (hier weiblich) angeordnet. Dieses bewegt sich beim Bewegen der Kolbenstange 33 in Pfeilrichtung auf ein zweites Kupplungsteil 24 (hier männlich) zu, das sich am hinteren Ende der Reckstange 20 befindet, bis sich die beiden Teile 23, 24 der Kupplung 22 im Eingriff befinden (Figur 7). Die Kolbenstange 33 wird weiter fortbewegt in Pfeilrichtung E, bis die Spitze 21 der Reckstange 20 die Kuppe 15 des Vorformlings 11 berührt. Jetzt wird das Ventil 41 in Pfeilrichtung I geöffnet, sodass das komprimierte Blasgas 25 in die Blasdüse 34 und den Innenraum des Vorformlings 11 eintreten kann. Bei weiterer Fortbewegung der Kolbenstange 33 in Pfeilrichtung E wird der Vorformling 11 in Pfeilrichtung E gereckt. Gleichzeitig bewirkt das komprimierte Blasgas 25 das Blasen des Behälters 150 innerhalb der Blasformen 12. Ist das Blasformen des Behälters 150 abgeschlossen, erfolgt das Zurückziehen der Kolbenstange 33 in Pfeilrichtung F, wodurch auch die Reckstange 20 bis zu dem Punkt zurückgezogen wird, an dem sich die Kupplungsteile 23, 24 der Kupplung 22 trennen (Figur 11). Gleichzeitig wird auch das Blasgas 25 aus dem Behälter 150 in den Zylinder 32 zurückgeführt, wie zuvor beschrieben. Anschließend wird das Ventil 41 geschlossen und der Zylinder 32 wird wieder vollständig mit Blasgas 25 über die Blasgaszufuhr 26 aufgefüllt.

Um den Blaszyklus zu beenden (nicht dargestellt) fährt der Anschlusskolben 34 in entgegengesetzter Richtung H zurück und ermöglicht zusammen mit dem Öffnen der zweigeteilten Blasform 12 ein Entformen des geblasen Kunststoffbehälters 150.

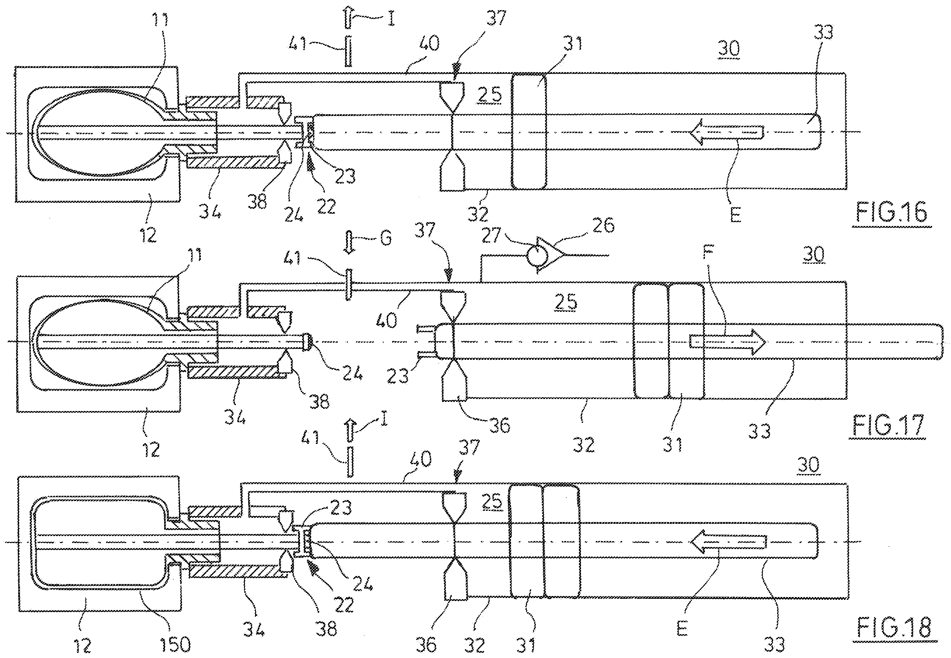

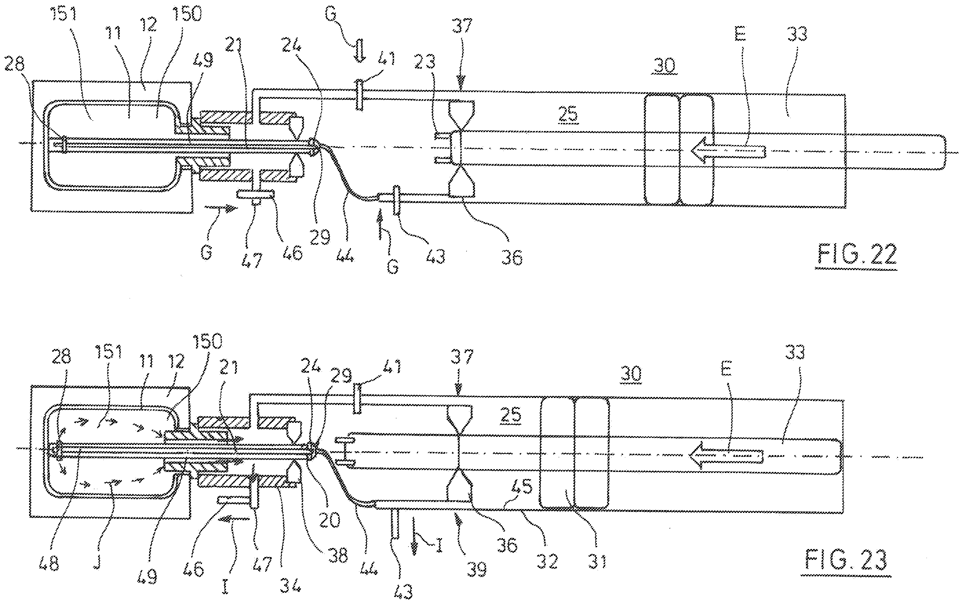

Die Figuren 16 bis 18 zeigen eine Ergänzung zu dem zuvor beschriebenen Verfahren als weitere Ausführungsform. Hierbei wird nach dem ersten Hub, der bereits auch zum Recken genutzt wurde (siehe Figur 16) ein Zwischenhub während des Blasprozesses durchgeführt. Dafür wird das Ventil 41 in Pfeilrichtung G geschlossen und die Kolbenstange 33 unter Befüllung des Zylinders 32 mit Blasgas 25 über die Blasgaszufuhr 26 in Pfeilrichtung F bewegt, wobei beim Zurückziehen der Kolbenstange 33 die Kupplung 22 gelöst wird, sodass sich der erste Kupplungsteil 23 und der zweite Kupplungsteil 24 trennen und die Reckstange 22 in der vorgesehenen Position wie in Figur 17 dargestellt verbleibt. Damit die Reckstange 22 in der vorgesehen Position verbleibt ist ein mechanischer Anschlag oder ein Haltevorrichtung (beides nicht dargestellte) notwendig, weil sonst der Druck des Blasgases die Reckstange in Pfeilrichtung F bewegt. Durch das Schließen des Ventils 41 bleibt auch das Blasgas 25 in dem bereits schon gereckten und teilweise geblasenen Vorformling 11. Der Blasprozess kommt hier an dieser Stelle während des Zwischenhubs zum Stillstand, wobei es für die Flaschenqualität vorteilhaft ist, wenn die Flasche schon fast komplett ausgebildet ist und nur der Druck beispielsweise lediglich zum besseren Ausprägen von Konturen oder dergleichen erhöht wird. Alternativ kann der Zwischenhub verwendet werden, um Spüllluft für Sonderverfahren des Blasprozesses zu erzeugen, nachdem die Flasche schon komplett ausgebildet ist (Figur 22). Anschließend wird die Kolbenstange in Pfeilrichtung E wieder bewegt, wodurch das Blasgas 25 wiederum komprimiert wird. Nach dem Verbinden der Kupplungsteile 23, 24 wird auch das Ventil 41 in Pfeilrichtung I geöffnet und der Blasvorgang wird wie zuvor beschrieben fortgesetzt.

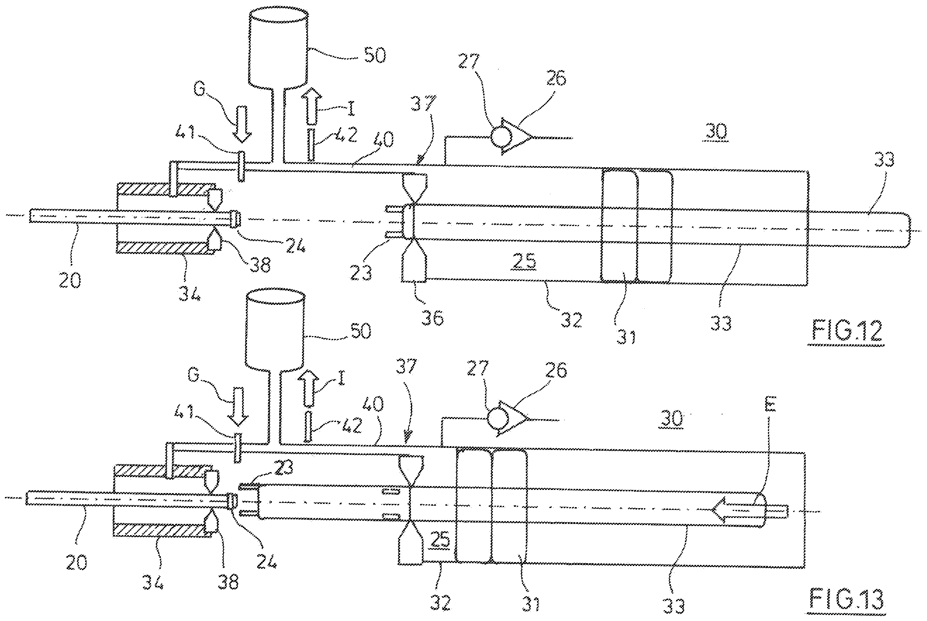

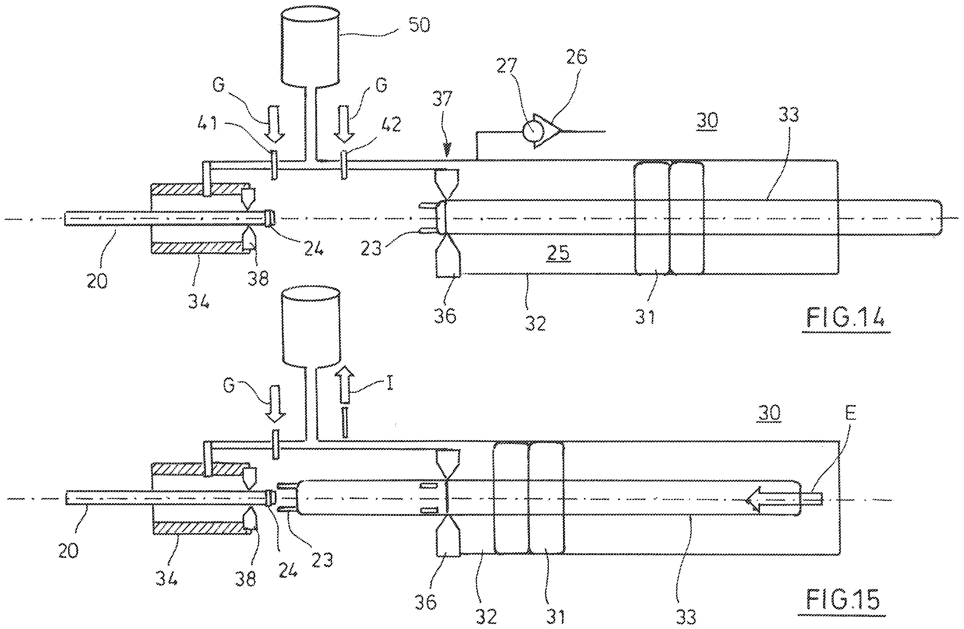

Eine weitere erfindungsgemäße Ausführungsform ist in den Figuren 12 bis 15 dargestellt. Hier ist in der Leitung 40 ein weiteres Ventil 42 vorgesehen. Zwischen den Ventilen 41 und 42 ist ein Speicher 50 vorgesehen. Über den Speicher 50 ist es möglich, vor dem Blasprozess eine hinreichende Menge komprimiertes Blasgas 25 zwischen zu speichern, indem ein oder mehrere Zusatzhübe mit dem Kolben 31 im Zylinder 32 über ein Antreiben mit einem nicht dargestellten Antrieb der Kolbenstange 33 durchgeführt wird. Hierfür ist das Ventil 42 während des Vorschiebens des Kolbens 31 über die Kolbenstange 33 in Pfeilrichtung E (Figuren 13 und 15) in geöffneter Stellung und das Ventil 41 in geschlossener Stellung, so dass das Blasgas 25 im Speicher 50 komprimiert wird und nicht an den Vorformling 11 abgegeben wird. Anschließend wird das Ventil 42 in Pfeilrichtung G geschlossen. Die Kolbenstange 33 wird unter Befüllen des Zylinders 32 über die Blasgaszufuhr 26 erneut mit Blasgas 25 zurückgezogen. Anschließend kann das Blasgas erneut komprimiert und durch Öffnen des Ventils 42 an den Speicher 50 abgegeben werden. Dieses kann so oft wiederholt werden, bis im Speicher der hinreichende Blasdruck vorhanden ist.

Anschließend wird beim letzten Hub der Kolbenstange 33 in Pfeilrichtung E der Hub weiter ausgeführt, bis die Kupplungsteile 23, 24 sich verbinden, sodass bei der Fortsetzung der Bewegung der Kolbenstange 33 in Pfeilrichtung E auch die Reckstange 20 in den hier nicht dargestellten Vorformling 11 hinein zur Durchführung des Streckens und Blasens des Vorformlings 11 hin zum Behälter 150 durchgeführt werden kann, wie zuvor beschrieben. Hierfür wird das Ventil 41 geöffnet. Das Ventil 42 ist entweder geschlossen oder auch geöffnet, je nach Anforderung.

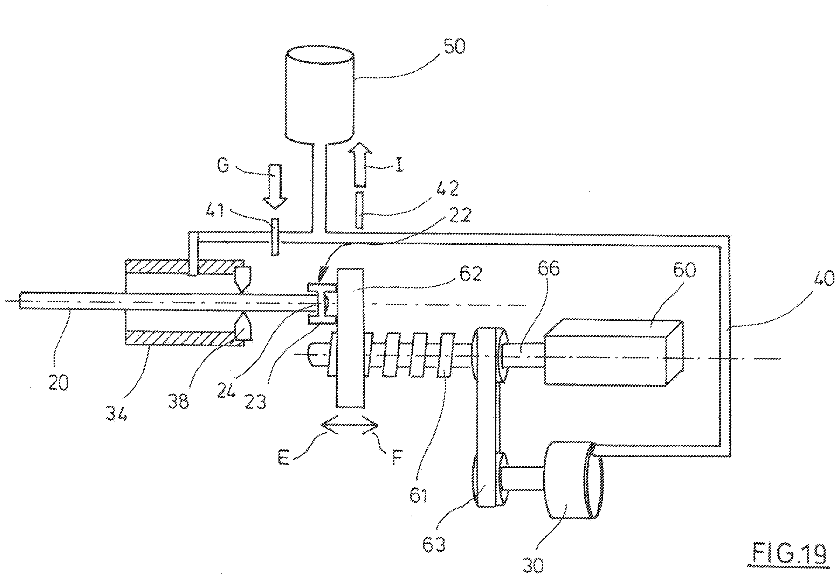

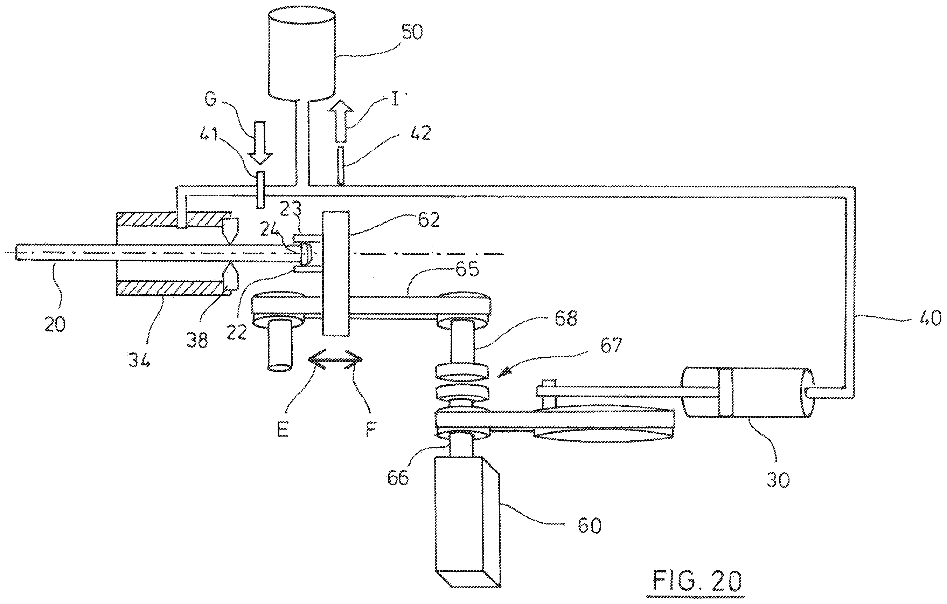

Die Figuren 19 und 20 zeigen zwei weiter alternative Ausführungsformen, bei denen ein Servoantrieb 60 vorgesehen ist. Dessen Antriebswelle 66 ist mit einer Spindelstange 61 verbunden. In Figur 19 ist auf der Spindel 61 ein Schlitten 62 mit Spindelmutter angeordnet, der in Pfeilrichtung E, F auf der Spindel 61 verfahrbar ist. Es ist eine Kupplung 22 zwischen Reckstange 22 und Schlitten 62 vorgesehen. Am Schlitten ist dabei das erste Kupplungsteil 23 und an der Reckstange 22 das zweite Kupplungsteil 24 vorgesehen. Weiterhin ist die Antriebswelle 66 des Servoantriebs 60 über einen Riementrieb 63 mit einem Verdichter 30 (hier als Radialkolbenpumpe beispielhaft dargestellt) verbunden. Der Verdichter 30 ist über einen Leitung 40, in der zwei Ventile 41, 42 angeordnet sind, mit einer Blasdüse 34, in der die Reckstange 20 über Blasdüsendichtung 38 geführt ist, verbunden. Zwischen den Ventilen 41, 42 ist ein Speicher 50 vorgesehen. Der Verdichter 30 komprimiert Blasgas durch die Leitung 40 in den Speicher 50. Währenddessen bewegt sich der Schlitten 62 auf der Spindel 61 zur Reckstange hin. Wird der Schlitten 62 mit der Reckstange 20 über die Kupplung 22 verbunden, wird in Pfeilrichtung E die Reckstange 22 in den Vorformling 11 hinein bewegt. Erreicht die Spitze 21 der Reckstange 20 die Kuppe 15 des Vorformlings 11, wird das Ventil 41 in Pfeilrichtung I geöffnet und das komprimierte Blasgas 25 strömt in den Vorformling 11, woraufhin das Blasen des Behälters 150 bei gleichzeitigen Recken in Pfeilrichtung E in der Blasform 12 erfolgt.

In Figur 20 ist ebenfalls ein Servoantrieb 60 dargestellt, der eine Antriebswelle 66 aufweist. Über eine Kupplung 67 ist die Antriebswelle 66 mit einer weiteren Welle 68 verbindbar. Die weitere Welle 68 ist mit einem Zahnriemen 65 verbunden, auf dem ein Schlitten 62 vorgesehen ist, der in Pfeilrichtung E, F auf dem Zahnriemen 65 erfahrbar ist. Zwischen Schlitten 62 und Reckstange 20 ist hier optional eine Kupplung 22 vorgesehen, mit einem ersten Kupplungsteil 23 am Schlitten 62 und einem zweiten Kupplungsteil 24 an der Reckstange 20. Die Reckstange 20 ist in einer Blasdüse 34 über Blasdüsendichtungen 38 geführt. Der Servoantrieb 60 ist mit einer Kolbenpumpe als Verdichter 30 verbunden. Dieser ist über eine Leitung 40 mit der Blasdüse 34 verbunden. In der Leitung 40 sind wiederum Ventile 41, 42 vorgesehen, zwischen denen ein Speicher 50 angeordnet ist. Die Antriebswelle 66 des Servoantriebs 60 ist mit dem Verdichter 30 verbunden.

Durch die Kupplung 67 ist es möglich, den Schlitten 62 vom Antreiben des Verdichters 30 zu trennen, sodass entsprechend komprimiertes Blasgas im Speicher 50 vorgesehen werden kann, ohne den Schlitte 62 zu bewegen. Soll die Kupplung 67 nicht vorgesehen werden, kann wiederum die hier auch dargestellte Kupplung 22 zum Trennen der Reckstange 22 vom Verdichter 30 zum Einsatz kommen.

Der Verdichter 30 komprimiert Blasgas durch die Leitung 40 in den Speicher 50. Währenddessen bewegt sich der Schlitten 62 auf der Spindel 61 zur Reckstange hin. Wird der Schlitten 62 mit der Reckstange 20 über die Kupplung 22 verbunden, wird in Pfeilrichtung E die Reckstange 22 in den Vorformling 11 hinein bewegt. Erreicht die Spitze 21 der Reckstange 20 die Kuppe 15 des Vorformlings 11, wird das Ventil 41 in Pfeilrichtung I geöffnet und das komprimierte Blasgas 25 strömt in den Vorformling 11, woraufhin das Blasen des Behälters 150 bei gleichzeitigen Recken in Pfeilrichtung E in der Blasform 12 erfolgt.

Die Figuren 22 und 23 zeigen eine weitere alternative Ausführungsform. Die Reckstange 20 weist einen Hohlraum 21 im Inneren auf. Dieser Hohlraum 21 ist über wenigstens eine Öffnung 28 mit dem Innenraum 151 des Behälters 150 verbunden. An dem gegenüberliegenden Ende ist ein Anschluss 29 vorgesehen, an dem eine Verbindungsleitung 45 anschließbar ist.

Der Zylinder 32 weist eine weitere Öffnung 39 auf, an die eine Leitung 44 angeschlossen ist. In der Leitung 44 ist ein Ventil 43 vorgesehen, dass in Pfeilrichtung I die Leitung 44 öffnet und in Pfeilrichtung G die Leitung 40 schließt Die Leitung 44 ist an ihrem Ende mit der Verbindungsleitung 45 verbunden.

Die Blasdüse 34 weist einen Anschluss 47 mit einem Entlüftungsventil 46 auf, dass in Pfeilrichtung I den Anschluss 47 öffnet und in Pfeilrichtung G schließt.

Ist das Ventil 41 geschlossen kann erneut Blasgas 25 durch den Kolben 31 des Verdichters 30 im Zylinderraum 32 bereitgestellt werden. Dieses kann als Spülgas/spülluft 48 zum Einsatz kommen, um den Behälter 150 über die Reckstange 20 zu spülen und damit den Innenraum 151 des Behälters zu kühlen. Der Fluss des Spülgases 48 ist mit Pfeilen J dargestellt in Figur23.

Zum Spülen werden das Ventil 43 und das Ventil 46 geöffnet. Das Spülgas 48 tritt in die Verbindungsleitung 45 ein, gelangt hierüber in den Innenraum 21 der Reckstange 20 und tritt aus dem Innenraum 21 über die Öffnung 28 in den Innenraum des Behälters 151 aus, um hier zu kühlen. Von dort gelangt das Spülgas 48 durch den Zwischenraum 49 zischen der Reckstange 20 und der Innenseite der Mündung des geblasenen Behälters 150 in die Blasdüse ein und durch den Anschluss 47 und das offene Ventil 46 in die Umgebung aus.

Zum Beenden des Spülens werden die Ventile 43, 46 in Pfeilrichtung I geschlossen und der normale Blasprozess wird fortgesetzt.

Das Spülen kann notwendig sein, um bei dickwandigen Flaschen die Kühlzeit in der Form zu reduzieren oder wenn bei Sonderverfahren des Streckblasen die Blasformen beheizt sind.

## Patentansprüche

1. Vorrichtung zur Blasformung von Behältern (150) aus einem thermoplastischen Material aus einem Vorformling (11)
• mit wenigstens einer Blasstation (10), die wenigstens eine Blasform (12) zur Ausformung des Behälters (150) aufweist,
• mit wenigstens einem Verdichter (30) zur Bereitstellung von Blasgas (25) zur Durchführung der Blasformung in der Blasform (12),
• mit wenigstens einer Blasdüse (34) zur Abgabe des Blasgases (25) an den Vorformling (11), wobei die Blasdüse (34) mit dem Verdichter (30) fluidisch verbunden ist,
• mit wenigstens einer Reckstange (20) zum Recken des Vorformlings (11),
• mit wenigstens einem Reckstangenantrieb (60) zum Bewegen der wenigstens einen Reckstange (22) in den Vorformling (11) hinein,
**dadurch gekennzeichnet, dass** der Reckstangenantrieb (60) den Verdichter (30) zum Bereitstellen des Blasgases (25) antreibt und dass der Verdichter (30) über eine Leitung (40) mit der Blasdüse (34) verbunden ist, die mit einem Blasgasspeicher (50) verbunden ist, wobei der Blasgasspeicher (50) bevorzugt über wenigstens ein Ventil (41, 42) von der Blasdüse (34) und/oder dem Verdichter (30) trennbar ist.

2. Vorrichtung nach Anspruch 1, **dadurch gekennzeichnet, dass** zwischen der Reckstange (20) und dem Verdichter (30) eine kuppelbare Verbindung (22, 67) besteht.

3. Vorrichtung nach Anspruch 1 oder 2, **dadurch gekennzeichnet, dass** der Verdichter (30) das Blasgas (25) mittels einer Linearbewegung und/oder einer Rotationsbewegung bereitstellt.

4. Vorrichtung nach einem der Ansprüche 1 bis 3, **dadurch gekennzeichnet, dass** der Verdichter (30) wenigstens einen Kolben (31) mit einer Kolbenstange (33) und wenigstens einen Zylinder (32) aufweist.

5. Vorrichtung nach Anspruch 4, **dadurch gekennzeichnet, dass** die Kolbenstange (33) mit der Reckstange (20) verbunden ist, bevorzugt über eine Kupplung (22).

6. Vorrichtung nach Anspruch 4 oder 5, **dadurch gekennzeichnet, dass** die Kolbenstange (33) einen Überströmabschnitt (35) zur Abgabe des Blasgases (25) aus dem Zylinder (32) an die Blasdüse (34) aufweist.

7. Vorrichtung nach Anspruch 6, **dadurch gekennzeichnet, dass** der Überströmabschnitt (35) so ausgeführt und angeordnet ist, dass die Blasgasabgabe direkt an die Blasdüse (34) erfolgt.

8. Vorrichtung nach einem der Ansprüche 1 bis 7, **dadurch gekennzeichnet, dass** der Verdichter (30) über eine Leitung (40) mit der Blasdüse (34) verbunden ist, die bevorzugt wenigstens ein Ventil (41, 42) aufweist.

9. Vorrichtung nach einem der Ansprüche 1 bis 8, **dadurch gekennzeichnet, dass** der Vorformling (11) eine Mündung aufweist, die in einer Hülse (120), bevorzugt einer Transporthülse, angeordnet ist, oder dass der Vorformling (11) von einer Zange zum Transport gehalten ist.

10. Vorrichtung nach einem der Ansprüche 1 bis 9, **dadurch gekennzeichnet, dass** die Reckstange (22) über einen Spindelantrieb (60, 61), einen Zahnstangenantrieb, einen Magnetfeldantrieb und/oder einen Zahnriemenantrieb (60, 65) bewegbar ist, der mit dem Verdichter (30) zu dessen Antrieb verbunden ist.

11. Vorrichtung nach einem der Ansprüche 1 bis 9, **dadurch gekennzeichnet, dass** eine Verbindung zwischen dem Verdichter (30) und einem Innenraum (151) des Behälters (150) vorgesehen ist.

12. Vorrichtung nach einem der Ansprüche 1 bis 11, **dadurch gekennzeichnet, dass** der Reckstangenantrieb (60) den Verdichter (30) zusammen mit der Bewegung der Reckstange (20) zum Bereitstellen des Blasgases (25) antreibt.

13. Verfahren zur Blasformung von Behältern (150), bei dem ein Vorformling (11) nach einer thermischen Konditionierung innerhalb einer Blasform (12) einer Blasstation (10) einer Vorrichtung zur Blasformung von Behältern (150), insbesondere nach einem der Ansprüche 1 bis 13, durch Blasdruckeinwirkung von in die Blasform (12) eingebrachtem Blasgas (25) in den Behälter (150) umgeformt wird, wobei ein Recken des Vorformlings (11) durch Einführen einer Reckstange (20) in den Vorformling (11) vorgenommen wird, **dadurch gekennzeichnet, dass** das Blasgas (25) von einem Verdichter (30) bereitgestellt wird, der von einem Antrieb (60) angetrieben wird, dass die Reckstange (20) von einem Antrieb (60) angetrieben wird, und dass die Reckstange (20) und der Verdichter (30) von dem Antrieb (60) zusammen angetrieben werden und dass der Verdichter (30) über eine Leitung (40) mit der Blasdüse (34) verbunden ist, die mit einem Blasgasspeicher (50) verbunden ist, wobei der Blasgasspeicher (50) bevorzugt über wenigstens ein Ventil (41, 42) von der Blasdüse (34) und/oder dem Verdichter (30) trennbar ist.

14. Verfahren nach Anspruch 13, **dadurch gekennzeichnet, dass** das in den geformten Behälter (150) eingebrachte Blasgas (25) von dem Verdichter (30) aus dem Behälter entfernt wird.

## Claims

1. Device for blow molding containers (150) made of a thermoplastic material from a preform (11)
• with at least one blowing station (10), which has at least one blow mold (12) for forming the container (150),
• with at least one compressor (30) for providing blowing gas (25) for carrying out the blow molding in the blow mold (12),
• with at least one blowing nozzle (34) for delivering the blowing gas (25) to the preform (11), the blowing nozzle (34) being fluidically connected to the compressor (30),
• with at least one stretching rod (20) for stretching the preform (11),
• with at least one stretching rod drive (60) for moving the at least one stretching rod (22) into the preform (11),
**characterized in that** the stretching rod drive (60) drives the compressor (30) to provide the blowing gas (25) and **in that** the compressor (30) is connected to the blowing nozzle (34) via a conduit (40), which is connected to a blowing gas reservoir (50), the blowing gas reservoir (50) preferably being separable from the blowing nozzle (34) and/or the compressor (30) via at least one valve (41, 42).

2. Device according to claim 1, **characterized in that** between the horizontal bar (20) and the compressor (30) is a couplable connection (22, 67).

3. Device according to claim 1 or 2, **characterized in that** the compressor (30) provides the blowing gas (25) by means of a linear movement and/or a rotational movement.

4. Device according to one of claims 1 to 3, **characterized in that** the compressor (30) comprises at least one piston (31) with a piston rod (33) and at least one cylinder (32).

5. Device according to claim 4, **characterized in that** the piston rod (33) is connected to the stretching rod (20), preferably via a coupling (22).

6. Device according to claim 4 or 5, **characterized in that** the piston rod (33) has an overflow section (35) for discharging the blowing gas (25) from the cylinder (32) to the blowing nozzle (34).

7. Device according to claim 6, **characterized in that** the overflow section (35) is designed and arranged in such a way that the blowing gas is discharged directly to the blowing nozzle (34).

8. Device according to one of claims 1 to 7, **characterized in that** the compressor (30) is connected to the blowing nozzle (34) via a conduit (40), which preferably comprises at least one valve (41, 42).

9. Device according to one of claims 1 to 8, **characterized in that** the preform (11) has a mouth which is arranged in a sleeve (120), preferably a transport sleeve, or **in that** the preform (11) is held by tongs for transport.

10. Device according to one of claims 1 to 9, **characterized in that** the stretching rod (22) can be moved via a spindle drive (60, 61), a rack and pinion drive, a magnetic field drive and/or a toothed belt drive (60, 65), which is connected to the compressor (30) to drive it.

11. Device according to any one of claims 1 to 9, **characterized in that** a connection between the compressor (30) and an interior (151) of the container (150) is realized.

12. Device according to one of claims 1 to 11, **characterized in that** the stretching rod drive (60) drives the compressor (30) together with the movement of the stretching rod (20) to provide the blowing gas (25).

13. Method for blow-molding containers (150), in which a preform (11), after thermal conditioning within a blow mold (12) of a blowing station (10) of a device for blow-molding containers (150), in particular according to one of claims 1 to 13, is reshaped into the container (150) by the action of blowing pressure of blowing gas (25) introduced into the blow mold (12), wherein stretching of the preform (11) is carried out by inserting a stretching rod (20) into the preform (11), **characterized in that** the blowing gas (25) is provided by a compressor (30) which is driven by a drive (60), **in that** the stretching rod (20) is driven by a drive (60), and **in that** the stretching rod (20) and the compressor (30) are driven together by the drive (60) and **in that** the compressor (30) is connected via a conduit (40) to the blowing nozzle (34), which is connected to a blowing gas reservoir (50), the blowing gas reservoir (50) preferably being separable from the blowing nozzle (34) and/or the compressor (30) via at least one valve (41, 42).

14. Method according to claim 13, **characterized in that** the blowing gas (25) introduced into the shaped container (150) is removed from the container by the compressor (30).

## Revendications

1. Dispositif pour le moulage par soufflage de récipients (150) en un matériau thermoplastique à partir d'une préforme (11)
- avec au moins un poste de soufflage (10), qui présente au moins un moule de soufflage (12) pour le formage du récipient (150),
- avec au moins un compresseur (30) pour la fourniture de gaz de soufflage (25) pour l'exécution du moulage par soufflage dans le moule de soufflage (12),
- avec au moins une buse de soufflage (34) pour délivrer le gaz de soufflage (25) à la préforme (11), la buse de soufflage (34) étant reliée fluidiquement au compresseur (30),
- avec au moins une barre d'étirage (20) pour étirer la préforme (11),
- avec au moins un entraînement de barre d'étirage (60) pour déplacer l'au moins une barre d'étirage (22) dans la préforme (11),
**caractérisé en ce que** l'entraînement de barre d'étirage (60) entraîne le compresseur (30) pour fournir le gaz de soufflage (25) et **en ce que** le compresseur (30) est relié à la buse de soufflage (34) par l'intermédiaire d'une conduite (40), qui est reliée à un réservoir de gaz de soufflage (50), le réservoir de gaz de soufflage (50) pouvant de préférence être séparé de la buse de soufflage (34) et/ou du compresseur (30) par l'intermédiaire d'au moins une soupape (41, 42).

2. Dispositif selon la revendication 1, **caractérisé en ce qu'**il existe une liaison (22, 67) pouvant être accouplée entre la barre d'étirage (20) et le compresseur (30) .

3. Dispositif selon la revendication 1 ou 2, **caractérisé en ce que** le compresseur (30) fournit le gaz de soufflage (25) au moyen d'un mouvement linéaire et/ou d'un mouvement rotatif.

4. Dispositif selon l'une quelconque des revendications 1 à 3, **caractérisé en ce que** le compresseur (30) présente au moins un piston (31) avec une tige de piston (33) et au moins un cylindre (32).

5. Dispositif selon la revendication 4, **caractérisé en ce que** la tige de piston (33) est reliée à la barre d'étirage (20), de préférence par l'intermédiaire d'un accouplement (22).

6. Dispositif selon la revendication 4 ou 5, **caractérisé en ce que** la tige de piston (33) présente une section de débordement (35) pour délivrer le gaz de soufflage (25) depuis le cylindre (32) vers la buse de soufflage (34).

7. Dispositif selon la revendication 6, **caractérisé en ce que** la section de débordement (35) est conçue et agencée de telle sorte que le gaz de soufflage est délivré directement à la buse de soufflage (34).

8. Dispositif selon l'une quelconque des revendications 1 à 7, **caractérisé en ce que** le compresseur (30) est relié à la buse de soufflage (34) par l'intermédiaire d'une conduite (40) qui présente de préférence au moins une soupape (41, 42).

9. Dispositif selon l'une quelconque des revendications 1 à 8, **caractérisé en ce que** la préforme (11) présente une embouchure agencée dans un manchon (120), de préférence un manchon de transport, ou **en ce que** la préforme (11) est maintenue par une pince pour le transport.

10. Dispositif selon l'une quelconque des revendications 1 à 9, **caractérisé en ce que** la barre d'étirage (22) peut être déplacée par l'intermédiaire d'un entraînement à broche (60, 61), d'un entraînement à crémaillère, d'un entraînement à champ magnétique et/ou d'un entraînement à courroie crantée (60, 65), qui est relié au compresseur (30) pour son entraînement.

11. Dispositif selon l'une quelconque des revendications 1 à 9, **caractérisé en ce qu'**une liaison est prévue entre le compresseur (30) et un espace intérieur (151) du récipient (150).

12. Dispositif selon l'une quelconque des revendications 1 à 11, **caractérisé en ce que** l'entraînement de barre d'étirage (60) entraîne le compresseur (30) conjointement avec le déplacement de la barre d'étirage (20) pour fournir le gaz de soufflage (25) .

13. Procédé de moulage par soufflage de récipients (150), dans lequel une préforme (11), après un conditionnement thermique à l'intérieur d'un moule de soufflage (12) d'un poste de soufflage (10) d'un dispositif de moulage par soufflage de récipients (150), notamment selon l'une quelconque des revendications 1 à 13, est transformée en le récipient (150) par l'action de la pression de soufflage du gaz de soufflage (25) introduit dans le moule de soufflage (12), un étirage de la préforme (11) étant effectué par l'insertion d'une barre d'étirage (20) dans la préforme (11), **caractérisé en ce que** le gaz de soufflage (25) est fourni par un compresseur (30) qui est entraîné par un entraînement (60), **en ce que** la barre d'étirage (20) est entraînée par un entraînement (60), et **en ce que** la barre d'étirage (20) et le compresseur (30) sont entraînés ensemble par l'entraînement (60), et **en ce que** le compresseur (30) est relié à la buse de soufflage (34) par l'intermédiaire d'une conduite (40) qui est reliée à un réservoir de gaz de soufflage (50), le réservoir de gaz de soufflage (50) pouvant de préférence être séparé de la buse de soufflage (34) et/ou du compresseur (30) par l'intermédiaire d'au moins une soupape (41, 42).

14. Procédé selon la revendication 13, **caractérisé en ce que** le gaz de soufflage (25) introduit dans le récipient moulé (150) est extrait du récipient par le compresseur (30).
